(19) Europäisches Patentamt European Patent Office Office européen des brevets

(11) **EP 1 292 112 B1**

(12) **EUROPEAN PATENT SPECIFICATION**

(45) Date of publication and mention
of the grant of the patent:
**23.02.2011 Bulletin 2011/08**

(51) Int Cl.:
***H04N 1/40*** *(2006.01)*

(21) Application number: **02078405.4**

(22) Date of filing: **13.08.2002**

(54) **Conversion of colour images to grey value images**

Umsetzung von Farbbildern auf Grauwertbilder

Conversion d'images couleurs en images niveaux de gris

(84) Designated Contracting States:
**DE FR GB NL**

(30) Priority: **23.08.2001 NL 1018808**

(43) Date of publication of application:
**12.03.2003 Bulletin 2003/11**

(73) Proprietor: **Océ-Technologies B.V.**
**5914 CC Venlo (NL)**

(72) Inventor: **Hofman, Paul Michiel**
**6533 DP Nijmegen (NL)**

(74) Representative: **van Meeteren, Arend Anthonie**
**Océ-Technologies B.V.**
**Corporate Patents**
**Postbus 101**
**5900 MA Venlo (NL)**

(56) References cited:
**EP-A- 0 930 775    EP-A- 1 137 257**
**DE-C- 19 513 030**

**Description**

The invention relates to a method of converting a digital colour image to a grey value image, and more particularly a method of this kind suitable for distinguishably reproducing colours present in the colour image.

A colour image is very frequently converted to a grey value image in practice. This is done, for example, when a colour photograph is copied by a conventional copier in black and white, or when a colour image is printed in black and white by means of a printer.

In modern copying machines, the image on the photograph is converted by a scanner or other image sensing device to a digital image. In many cases the scanner involved converts the image to a digital colour image. An image is converted into pixels with a colour value for each pixel. It is conventional to express the colour values in this case in R, G, B values. To make a grey value print, the copier will convert the R, G and B values to a grey value. For this purpose, the R, G and B values are often averaged, possibly with weighting. This is described, for example, in EP-A-500327. Preferably, use is then made of the luminance of the colour signal. These colour-to-grey value conversions based on luminance, and conversions in which (a weighted) average of the colour values such as R, G, B is calculated, are hereinafter referred to as "naive" conversions. A conversion of this kind disregards the context or the environment of a pixel for conversion.

In the conversion of colour values to grey values, three dimensions are projected on one dimension. As a result, certainly in the case of the above-described averaging of RGB values, very different colours can be projected on the same or substantially the same grey value. As a result, objects of different colour may no longer be distinguishable in the grey value image. Accordingly there is a need for a conversion method which makes colour differences which are present in the colour image, distinguishable in the grey value image as well.

This requirement is described in US-A 4 369 461, and the solution proposed is to replace colours in the colour image by black and white patterns, for example hatching, which can be satisfactorily distinguished from one another.

The above document EP-A-500327 offers a similar solution, in which the replacing patterns are also programmable for the user.

It will be clear that although the original colours are distinguishable in an image converted in such a manner, the quality of the image suffers serious impairment. In addition, the distribution of the colour range over the different code patterns Is pre-programmed and therefore not necessarily suitable for every colour image. Consequently it may still happen that colours which are satisfactorily distinguishable from one another are printed with the same pattern,

A conversion of colour values to grey values in a way which can be controlled by a user is described in US-5 898 819, in which a solution is selected in which an image is divided up Into document components, such as text, logo's, images and so on. The user can choose a separate solution for each component. Grey scaling can also be selected, and this is equivalent in practice to averaging of the colour values. In all these cases pre-programmed conversion functions are involved, which are not adaptable to the image used. Here again, colours which are satisfactorily distinguishable may be imaged with the same grey value.

One of the objects of this invention is to improve the conversion of digital colour images to grey value images, wherein, in particular, colours which are of themselves distinguishable in the original image are converted to distinguishable grey values.

To this end, the invention provides a method of converting a digital colour image , built up of pixels, to a grey value image and in so doing distinguishably reproducing colours present in the colour image, characterised by the following steps:

a. determining main colour values of the digital colour image by means of a cluster analysis of the colours of the pixels in a colour space;
b. converting said main colour values to grey values by means of a predefined naïve conversion function based on luminance or a weighted average of colour channel values of the digital colour image;
c. calculating a distance in a colour space, hereinafter termed the colour distance, of main colour values mutually;
d. calculating a distance on a grey value scale, hereinafter termed grey distance, of grey values corresponding to the main colour values mutually;
e. compiling an adapted conversion function for optimisation of the agreement between corresponding grey distances and colour distances.

In one embodiment, the conversion function Is optimised on the basis of a comparison of grey values in the digital grey value image after conversion with the said conversion function and grey values in the digital image valid for the same pixels, after conversion with a pro-defined naïve conversion function.

In the conversion of an original colour image to a grey value Image, it is important that colours which are satisfactorily distinguishable to a human observer can also be distinguished in the grey value image, This will result in an adaptation of the conversion function in dependence on the colour content of the original image and is therefore specific for each colour image or group of colour images,

Since it is not desirable to depart excessively from the naive conversion (which roughly corresponds to the luminance sensation of a human observer), the adaptation Is also so optimised as to be as close as possible to the naive conversion.

According to one embodiment of the invention, the said optimisation is based on colour differences between a limited number of colour values, hereinafter termed main colours, which are defined by a cluster analysis of the colours of the colour image.

In this embodiment, the colour values in the colour image are divided Into a limited number of groups, termed clusters, and one colour value, termed the main colour, is selected for each cluster, which is the average of the colour values In the cluster. Another colour value could also be used to represent a cluster, for example the "center of gravity" of the colour values In the cluster. An optimisation of the conversion function is then carried out just for the set of main colours, This eliminates considerable computing and is nevertheless very effective.

This invention refers to grey values. Grey values can be obtained on a monitor screen by a higher or lower intensity of pixels. In printed matter, the grey values are frequently obtained by half toning. In this, grey areas are filled in by means of dots. The size of the dots then provides a darker or lighter grey tint. The invention relates to conversion to a grey value image suitable for imaging on a monitor screen for example, but also for printing by means of a digital printing press or a simple printer such as a printer connected to a personal computer.

In one embodiment, the conversion function is a combination of a pre-defined naive grey value conversion and a localised correction function, which correction function has a value which decreases with the distance in a colour space between a colour for conversion and a main colour. In this way it is has been found possible to limit the adaptation to a local area where problems occur. The adapted conversion function is, for example, the sum of the naive conversion and the correction function.

The invention also relates to an arrangement for converting a digital colour image to a grey value image and a copier and a printer, wherein the method according to the invention is applied. Finally, the invention relates to computer software for converting a digital colour image to a grey value image.

The invention will now be explained with reference to the following exemplified embodiment of the present invention, and illustrated by reference to drawings. This embodiment serves to illustrate the invention and should not be regarded as a limitation thereof. Referring to the drawing:

Fig. 1A is a colour image.

Fig. 1B is a grey value image made by converting the colour image of Fig. 1A by a known technique.

Fig. 2 is a flow diagram for a conversion according to the invention.

Fig. 3A is a projection of the colours of all the pixels of an image on to a plane in the colour space perpendicular to the grey value axis.

Fig. 3B shows histograms of the grey values of the different clusters in Fig. 3A.

Fig. 4 is an iso-grey contour of a grey value adaptation according to the invention, and

Fig. 5 is a block diagram of a digital copier.

In a digital image consisting of image dots or pixels, the colours for each pixel are expressed as vectors in a three-dimensional colour space. According to a usual convention, the colours $\vec{c}$ are expressed, for example, in RGB values. In a brackets notation $\vec{c} = (r, g, b)$, or in terms of the base vectors $\hat{r}, \hat{g}$, and $\hat{b}$ as:

$$\vec{c} = r\,\hat{r} + g\,\hat{g} + b\,\hat{b} \tag{1}$$

In a possible naive grey value conversion of these colour values to grey values, $L_0(\vec{c})$, which consists of a weighted linear combination of the values of R, G and B channels, the weighting factors are chosen equally, and this corresponds to averaging of the three channels:

$$L_0(\vec{c}) = \vec{c}.\frac{1}{3}(\hat{r} + \hat{g} + \hat{b}) = \frac{1}{3}(r + g + b) \tag{2}$$

In these conditions, different combinations of r, g and b can yield the same grey value. A problem occurs when the original image contains totally different colours which yield the same grey value. For example the colours $\vec{c}_1 = \hat{r}$ (red)

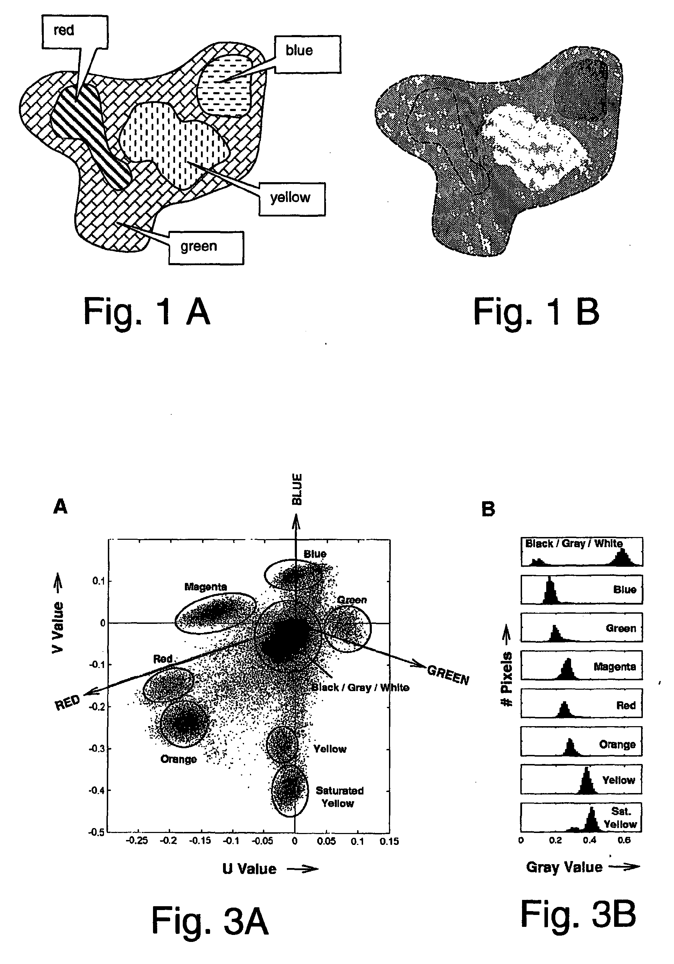

and $\vec{c}_2 = \overset{\wedge}{g}$ (green): these colours would yield the same grey value $L_0(\vec{c}_1) = L_0(\vec{c}_2) = {}^1/_3$ in the grey value image, so that the red and green areas can no longer be distinguished on the basis of their grey values in a colour image converted to a grey value image by means of this naive grey value conversion. This is an obstacle particularly when the areas adjoin one another. This problem is reproduced in Figs. 1A and 1B, Fig. 1A showing a digital colour image and Fig. 1B the image converted to grey values. It is striking that what is a red compartment in a green field in the colour image, can no longer be distinguished in the grey value image.

**Modified grey value conversion**

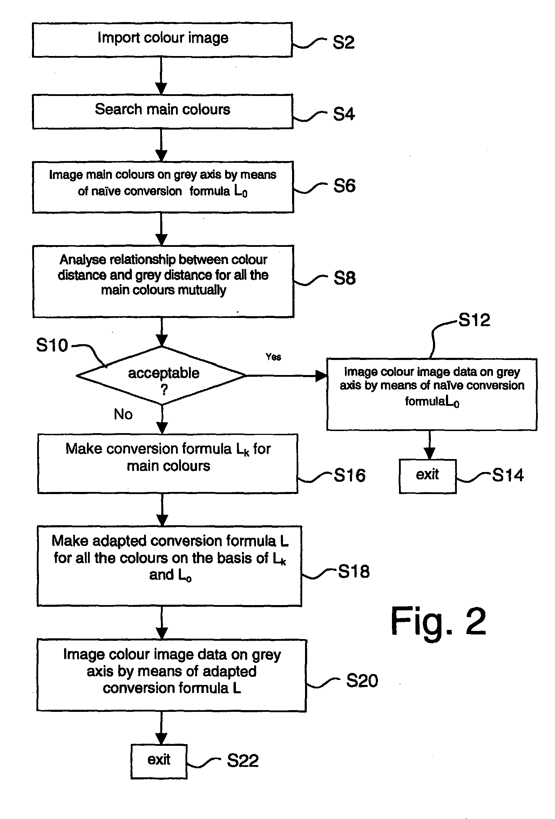

The invention provides a method of converting a digital colour image into a grey value image adapted to the colour content of an individual image. One exemplified embodiment of this method is shown diagrammatically in a flow diagram in Fig. 2.

A colour image is made available for processing in step S2, for example by inputting a file of colour image data into a working memory. A colour image often contains very many colours and it is not convenient to calculate an adapted conversion for all these colours, because this would require considerable computing power. An analysis is therefore first made of the colours occurring in the colour image. In many cases, groups of colours related to varying degrees are found to appear in the colour image and have the appearance of a "cloud" in a three-dimensional colour space, such as the r, g, b space in this example. A cloud of this kind is hereinafter referred to as a cluster. In an analysis of this kind, the colour space in which the work is being carried out is divided, for example, into a restricted number of sub-spaces each containing a cluster. A representative colour value is then selected for each cluster, for example by averaging the colours in the sub-space. These colours are hereinafter referred to as "main colours" (step S4).

The object of this approach is first to calculate an adapted conversion for a restricted number of colours and then extend this adapted conversion to the entire colour space. In this way the required computing time can be considerably limited.

Thus the main colours are converted to grey values in the next step S6 by means of a pre-programmed naive conversion $L_o$, as shown for example in formula (2).

For each pair of different main colours, the mutual distance in the colour space and the mutual distance of the corresponding grey values on the grey axis of said colour space are then calculated in step S8. The results are then compared with a pre-defined limit in order to determine whether adaptation of the conversion function is required (S10). If this does not appear to be necessary (all the colour differences appear to correspond to grey value differences of corresponding magnitude), then in step S12 the colour image data are converted to grey value image data by means of the naive conversion function $L_o$- whereafter the processing is complete.

If it is found in step S10 that distinguishable main colour differences have been converted to non-distinguishable grey value differences, then an adapted conversion function $L_k$ is calculated for the main colours in step S16. On the basis of this conversion function $L_k$, an adapted conversion function L is then calculated in step S18 and is valid for all the colours. This is effected by locally adapting the naive conversion function $L_o$ with a correction factor on the basis of the conversion function $L_k$.

The digital colour image is then converted to a digital grey value image by means of the adapted conversion function L in step S20, whereafter the processing is completed.

Steps S8 to S14 can be skipped. They are not essential, but enable the computing time to be reduced, because not every image needs to be processed.

The processing will now be described in a more detailed form.

**Finding the main colours $\vec{c}_k$**

The colour content of the digital colour image (built up of pixels) is analysed in order to reduce the number of colours occurring to a few representative colours, hereinafter termed main colours. In this way a simple and compact representation of the colour content of the image can be obtained and this simplifies the analysis.

The colours (r, g, b) of all the pixels are projected on to a plane perpendicular to the grey axis, and this is particularly suitable for distinguishing differences in colour tone and saturation.

In most cases, the colours of an image appear to be close together in groups (clusters) corresponding to colours recognised by an observer in the image. The main colours are distinguished by identifying different clusters.

The two-dimensional projection plane is defined by two orthogonal unit vectors $\hat{u}$ and $\hat{v}$, and a third orthogonal unit vector $\hat{w}$ in the direction of the grey axis. The projection then consists in effect of a conversion of RGB co-ordinates (r, g, b) to UVW co-ordinates (u, v, w). The (u, v) components then represent the projection on the UV plane. The relevant co-ordinate transformation is defined as follows:

$$\begin{pmatrix} u \\ v \\ w \end{pmatrix} = \begin{pmatrix} -\dfrac{1}{\sqrt{2}} & \dfrac{1}{\sqrt{2}} & 0 \\ -\dfrac{1}{\sqrt{6}} & -\dfrac{1}{\sqrt{6}} & \dfrac{2}{\sqrt{6}} \\ \dfrac{1}{\sqrt{3}} & \dfrac{1}{\sqrt{3}} & \dfrac{1}{\sqrt{3}} \end{pmatrix} \begin{pmatrix} r \\ g \\ b \end{pmatrix} \tag{4}$$

Separate clusters are then identified in the UV plane. A main colour is associated with the average, or alternatively, the "center of gravity".

Fig. 3A shows as an example the projection of the colours for a certain image in which eight different clusters can be identified. In Fig. 3B grey value histograms are given for each cluster. It will be clear that some different cluster colours have the same grey value. Note also that the central cluster in this case consists of two clusters, black and white (Fig. 3B, top row). The boundaries for the clusters are indicated by contours which are drawn around each "cloud" in the UV plane. A check is then made whether clusters actually consist of a plurality of clusters in the direction $\hat{w}$ (along the grey axis). In the image in the example, only multiple clusters are observed near $(u, v) = (0, 0)$, where black, white and grey occur.

The colour co-ordinates of the different main colours (identified clusters) are expressed as $\vec{c}_k$ in this patent application. Index k refers to an independent main colour and lies in the range [1, ..., N], where N is the total number of identified main colours.

Netherlands patent number 1013669 describes different alternative methods for automatically searching main colours, and these can also be applied to the present invention.

**Analysis of the naïve conversion for the main colours**

When the main colours have been found, they are converted to grey values by means of the above-mentioned naïve conversion function $L_o$. A check is then made whether there is an unwanted overlap between the grey values corresponding to the main colours. The latter is the case if the colour $\vec{c}_k$ differs considerably for each pair of main colours, but the corresponding grey values $L_0(\vec{c}_k)$ do not or only hardly differ.

In order to quantify the degree of grey value overlap, i.e. the degree of agreement between two colours and their corresponding grey values, based on their mutual distance in the UV plane and their difference along the grey axis, use is made of a penalty function $P_1$.

The difference in "colour", $\Delta E_{kl}$, and the difference in grey value, $\Delta L_{kl}$, between two main colours in two different clusters k and I, are given in this example by:

$$\Delta L_{kl} = (L_k - L_l)^2$$
$$\Delta E_{kl} = (u_k - u_l)^2 + (v_k - v_l)^2 \tag{5}$$

where the original grey value is given by $L_k = L_0(\vec{c}_k)$.

The penalty function $p(\Delta E, \Delta L)$ is so defined that it results in a high value when the colur difference $\Delta E$ is large and at the same time the grey value difference $\Delta L$ is small. Any choice of the penalty function $p(\Delta E, \Delta L)$, which meets this basic requirement is possible. For example, the penalty function can be defined in terms of a (scaled) sigmoid hyperbolic tangent function $S(x) = \frac{1}{2}(1 + \tanh x)$, which increases monotonously with x. Penalty function $p(\Delta E, \Delta L)$ is then expressed as:

$$p(\Delta E, \Delta L) = S(-a(\Delta L - b)) . S(c(\Delta E - d)) \tag{6}$$

where the constants a, b, c and d (all > 0) quantify the limits of what can be indicated as "large" $\Delta E$, and a "small" $\Delta L$.

The overall penalty function $P_1$ is obtained by summation of equation (6) over all possible cluster pairs:

$$P_1 = \frac{2}{N(N-1)} \sum_{k=1}^{N-1} \sum_{l=k+1}^{N} p(\Delta E_{kl}, \Delta L_{kl}) \tag{7}$$

Note that the summation does not include the identical pairs (k=l), and each pair includes (k, l) in the calculation only once. In this way, a large penalty value for $P_1$ implies that the same main colours $\vec{c}_k$ can be imaged on the same grey value $L_k$ while a low value indicates that the main colours are projected on different grey values.

The value of the penalty function $P_1$ is then compared with a predetermined threshold value. If the value is lower than the threshold value, there is no reason for adapting the conversion and the grey value image from the naive conversion $L_o$ is used further. In the other case, the conversion function $L_o$ is so adapted that the main colours are converted to distinguishable grey values. For the adaptation, use is made of the same penalty function $P_1$.

**Modification of the naïve conversion for the main colours**

Adaptation of the colour-to-grey value conversion is carried out as follows: the grey values corresponding to the main colours are re-positioned on the grey axis, the penalty function is re-calculated and the result is compared with the first value. In an iterative process the best re-positioning of the grey values is thus searched by attempting to obtain a minimal value of the penalty function.

Minimisation of $P_1$ with respect to the grey values $\{L_k\}$ can be done in various ways, one of which is the gradient descent method. This repeats the modification of each grey value $L_k$ with small steps proportional to the negative derivative of the penalty function $P_1$ to $L_k$:

$$L'_k = L_k - \alpha \frac{\partial P_1}{\partial L_k} \tag{8}$$

where $L'_k$ is the renewed grey value for each cluster k, and $\alpha$ is a constant factor ($\alpha > 0$).

An even better result can be obtained by regulating the adapting effect of the penalty function $P_1$. Otherwise it would be possible that the new grey values would assume any possible value independently of the original grey value. For example, if the image consists of just two main colours, a minimal penalty value would be obtained for a maximum separation grey value: black would then be allocated to one main colour, while white would be allocated to the other.

To obviate this kind of problem, a second penalty function, $P_2$ is introduced. Penalty function $P_2$ increases when the grey value changes more with respect to the grey value from the naive conversion. As an example, $P_2$ is defined in terms of quadratic differences between new and naïve values:

$$P_2 = \sum_{i=1}^{N} (L_k - L_0(\vec{c}_k))^2 \tag{9}$$

A total penalty function P is then defined as the weighted sum of the penalty functions $P_1$ and $P_2$:

$$P = AP_1 + BP_2 \tag{10}$$

where A and B (positive) express the relative contribution of the respective penalty functions. In one embodiment, penalty function P is minimised in accordance with the following gradient descent rule:

$$L'_k \equiv L_k - \alpha \frac{\partial P_1}{\partial L_k} - \beta \frac{\partial P_2}{\partial L_k} \tag{11}$$

where $\alpha$ and $\beta$ are positive constants. The constants $\alpha$ and $\beta$ can be optimised on the basis of trial and error in order to obtain a satisfactory balance between the adaptation of the grey value and the resemblance to the original image.

## EP 1 292 112 B1

**Modification of the naïve conversion for all the colours**

Based on the new allocated grey values $L_k$ of the respective main colours $\vec{c}_k$, the naive conversion function $L_0$ $(\vec{c})$ is modified, resulting in a new conversion function $L(\vec{c})$. The new conversion function must contain a number of properties. Firstly, the conversion function must allocate to a colour $\vec{c}$ near a main colour k approximately the grey value $L_k$ which was allocated to that main colour. Secondly, for a colour $\vec{c}$ far away from all the main colours, there is no need to adapt the naive conversion, so that for these colours $\vec{c}$ the conversion function remains close to the naive conversion function.

The following conversion function satisfies these conditions. A correction factor which depends on the main colours $\vec{c}_k$ and respective grey values $L_k$ is added to the naive conversion $L_0$ $(\vec{c})$ in this:

$$L(\vec{c}) = L_0(\vec{c}) + \frac{\sum_{k=1}^{N} w(\vec{c} - \vec{c}_k)(L_k - L_0(\vec{c}_k))}{w_0 + \sum_{k=1}^{N} w(\vec{c} - \vec{c}_k)} \quad . \tag{12}$$

where $w_0$ is a constant weighting factor and $w(\Delta\vec{c})$ is a weighting function which obtains its minimum at $\Delta\vec{c} = 0$, and which decreases with $|\Delta\vec{c}|$.

Different choices are possible for $w(\Delta\vec{c})$. For example, the following can be chosen for the weighting function:

$$w(\Delta\vec{c}) = A\exp\left(-\frac{\Delta\vec{c}^2}{2\sigma^2}\right) \tag{13}$$

where A is the maximum amplitude of $w(\Delta c)$ and the constant $\sigma$ indicates the size of the area around the cluster centre $\vec{c}_k$ in which the weighting function $w(\vec{c} - \vec{c}_k)$ is large with respect to $w_0$.

The fact that the modified conversion function $L(\vec{c})$ in formula 12 satisfies the required properties will now be explained.

Where $\vec{c}$ is situated near cluster centre $\vec{c}_j$, $\vec{c} \approx \vec{c}_j$ and as a result $w(\vec{c} - \vec{c}_j)$ is large with respect to $w_0$. Assuming that the clusters are distinctly separated, the other weights will be small, say $w(|\vec{c} - \vec{c}_k|) \approx 0$, for $k \neq j$. The conversion function $L(\vec{c})$ can therefore be approximated by $L(\vec{c}) \approx L_0 (\vec{c}) - L_0 (\vec{c}_j) + L_j \approx L_j$ , and this satisfies the first requirement.

If $\vec{c}$ is far away from all the cluster centres $\vec{c}_k$, $|\vec{c} - \vec{c}_k|$ will be large and hence $w(\vec{c} - \vec{c}_k)$ will be small with respect to $w_0$ for all k. The correction factor in equation 12 will then be small so that $L(\vec{c}) \approx L_0(\vec{c})$ and this satisfies the second condition mentioned.

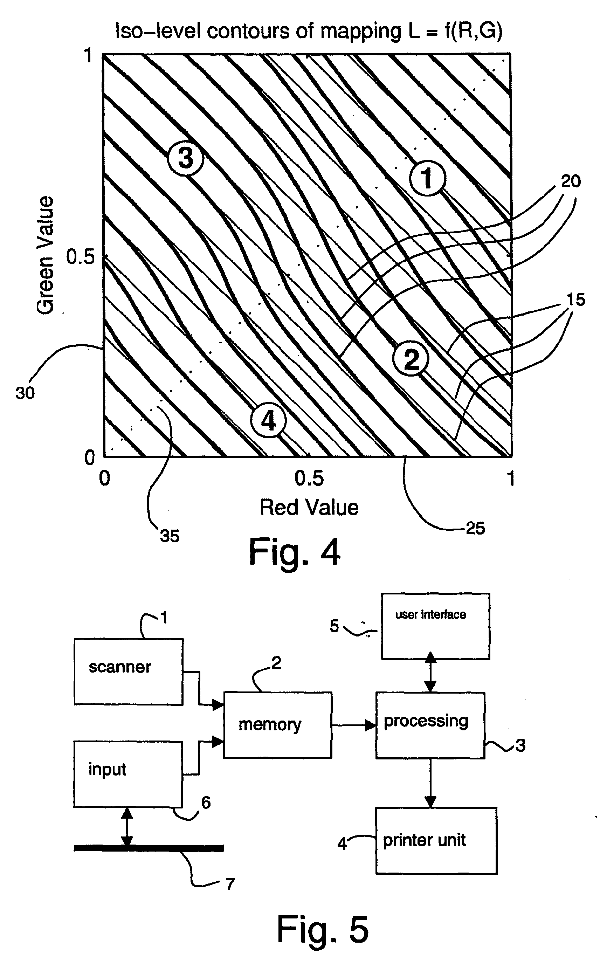

To give an idea of how a modified conversion function behaves in a colour space, Fig. 4 shows iso-grey lines of a naive conversion function $L_0(\vec{c})$ (15) and of an adapted conversion function $L(\vec{c})$ (20) for an example.

Fig. 4 shows a two-dimensional colour space extending through a horizontal red axis 25 and a vertical green axis 30. The blue channel is disregarded, so tha the conversion function can be visualised in a two-dimensional graph. The grey axis 35 extends diagonally.

Four colour clusters are shown in different positions in the RG plane (numbered circles). A problem now occurs in the case of colours 2 and 3, since their large distance in the RG plane is not expressed in the difference in the corresponding grey values according to the naive colour-to-grey conversion: both colours have practically the same grey value (thin lines 15). The adapted conversion function has been modified in the case of these two colours particularly and gives a higher grey value to colour 2 and a lower grey value to colour 3 (lines 20). The colour values of both the clusters are clearly distinguished in the new conversion function.

The constants introduced into the foregoing description can be filled in by the skilled man on a trial and error basis. Good results are obtained with the following values. However, these examples are given solely as an example.

$$\text{formula (6):} \quad \begin{aligned} a &- 6 \\ b &= 0,25 \\ c &= 6 \\ d &= 0,75 \end{aligned}$$

7

$$\text{formula (11):} \quad \begin{aligned} \alpha &= 0{,}005 \\ \beta &= 0{,}0005 \end{aligned}$$

$$\text{formula (12):} \quad w_0 = 1$$

$$\text{formula (13):} \quad \begin{aligned} A &= 50 \\ \sigma &= 0{,}15 \end{aligned}$$

**Practical application of the invention**

Fig. 5 shows a diagrammatic representation of the most important parts of a digital photocopier to which the invention as described above is applied.

This machine is provided with a scanner 1 having a device for converting a recorded image to a digital image, a memory 2 for storing the digital image, a processing unit 3 for processing the digital image and a printing unit 4 for printing the processed digital image on paper. A print of this kind may be a colour print. In most cases, a black and white print is made, or a grey value print. Many printing units cannot print actual grey values, but simulate grey values with raster techniques such as dithering or error diffusion

The machine is also provided with an operator interface 5 and an input unit 6 for receiving digital images made elsewhere, via a network 7, so that the machine can also be used as a printer.

The input image originating from the scanner 1 or the input unit 6 may be a colour image. To make a grey value print this colour image must be converted to a grey value image. To this end, the processing unit 3 is provided with a module for converting a colour image to a grey value image according to the invention.

The processing unit 3 is connected to the operating unit ("user interface") 5. The latter comprises selection means for switching the conversion adaptation according to the invention on or off, and may possibly also be provided with setting means for manual setting the setting parameters of the conversion function, for example by means of a slide or button. Also, the user interface 5 may be provided with reproducing means, for example a monitor, by means of which the user can interactively assess the result of the automatic or manual adaptations. On the other hand it is possible to arrange for any optimisation to be carried out completely automatically without the intervention of the user, or alternatively just to give the user the possibility of switching the optimisation of the conversion on or off.

When the invention is used in the printer, for example an independent network printer or the above-described digital copier, working as a printer, the user can, for example, indicate by means of the printer driver at his workstation that a colour image must be printed in grey values. In that case, a processing device in the printer will convert the digital colour image to a grey value image and print the latter.

It is also possible to carry out the conversion in a separate computer, for example the workstation of a user, and then send the converted digital image to a printer or store it in a mass memory.

Although the invention has been explained by reference to the above-described exemplified embodiment, it is not limited thereto. It will be clear to the skilled man that other embodiments are possible within the scope of the claims.

**Claims**

1.    A method of converting a digital colour image, built up of pixels, to a grey value image and In so doing distinguishably reproducing colours present in the colour Image, **characterised by** the following steps:

      a. determining main colour values of the digital colour image by means of a cluster analysis of the colours of the pixels in a colour space (S4);

      b. converting said main colour values to grey values by means of a predefined naïve conversion function (S6) based on luminance or a weighted average of colour channel values of the digital colour image;

      c. calculating a distance in a colour space, hereinafter termed the colour distance, of main colour values mutually;

      d. calculating a distance on a grey value scale, hereinafter termed grey distance, of grey values corresponding to the main colour values mutually;

      e. compiling an adapted conversion function for optimisation of the agreement between corresponding grey distances and colour distances (S18).

2. A method according to claim 1, wherein step e comprises calculating a localised correction function by means of optimisation of the agreement between corresponding grey distances and colour distances for said main colours (S16), and combining the naïve conversion function and the localised correction function (S18).

3. A method according to claim 2, wherein the localised correction function has a value which decreases with the distance in a colour space between a colour for conversion and a main colour.

4. A method according to any one of claims 1 or 2, wherein the generation of the adapted conversion function (S18) is carried out automatically, for each colour image or for a group of colour images separately.

5. An apparatus for converting a digital colour image to a grey value Image, the apparatus being provided with a memory (2) for storing a digital colour image and a processing unit (3) for processing digital data, **characterised by**:

 a. a cluster module for determining main colour values of the digital colour image by means of a cluster analysis of the colours of the pixels in a colour space;
 b. a conversion module for converting colour values to grey values by means of a naïve conversion function based on luminance or a weighted average of colour channel values of the digital colour image;
 c. a colour distance module for calculating the colour distance of colour values in a colour space;
 d. a grey distance module for calculating the grey distance of grey values on a grey value scale;
 e. an adaptation module for compiling an adaptive conversion function for optimisation of the agreement between corresponding grey distances and colour distances.

6. An apparatus according to claim 5, wherein the adaptation module is adapted to calculate a localised correction function by means of optimisation of the agreement between corresponding grey distances and colour distances for the said main colours, and combining the naïve conversion function and the localised correction function.

7. A computer program with a program code for converting a digital colour Image to a grey value image by performing all the steps of the method of any one of claims 1 or 4, when the program is performed in a computer.

8. A computer program product comprising computer software in accordance with claim 7, stored on a machine-readable storage medium.

9. A digital copier provided with a scanner, a processing unit (3) for processing digital Image data and a printing unit (4), **characterised in that** the processing unit (3) is provided with a conversion apparatus according to claim 5 or 6.

10. A digital copier according to claim 9, provided with a user interface (5) which is provided with means for so switching the said conversion apparatus that the colour-to-grey value conversion is performed optionally by means of a pre-defined naïve conversion function or by means of an automatically adapted conversion function.

11. A printer provided with a network connection unit (6) for receiving externally generated print orders, a processing unit (3) for processing digital image data and a printing unit (4), **characterised in that** the processing unit (3) is provided with a conversion apparatus according to claim 5 or 6.

12. A printer according to claim 11, wherein the said conversion apparatus is so programmable that a colour-to-grey value conversion is performed optionally by means of a predefined naive conversion function or by means of an automatically adapted conversion function.

**Patentansprüche**

1. Verfahren zur Umwandlung eines aus Pixeln aufgebauten digitalen Farbbildes in ein Grauwertbild, mit unterscheidbarer Wiedergabe von in dem Farbbild vorhandenen Farben, **gekennzeichnet durch** die folgenden Schritte:

 a. Bestimmen von Haupt-Farbwerten des digitalen Farbbildes mit Hilfe einer Cluster-Analyse der Farben der Pixel in einem Farbraum (S4)
 b. Umwandeln dieser Haupt-Farbwerte in Grauwerte mit Hilfe einer vordefinierten naiven Umwandlungsfunktion (S6), basierend auf Luminanz oder einem gewichteten Mittel von Farbkanalwerten des digitalen Farbbildes;
c. Berechnen eines gegenseitigen Abstands der Haupt-Farbwerte in einem Farbraum, im folgenden als Farbabstand bezeichnet;
d. Berechnen eines gegenseitigen Abstands von Grauwerten, die den Haupt-Farbwerten entsprechen, auf einer Grauwertskala, im folgenden als Grauabstand bezeichnet;
e. Compilieren einer adaptierten Umwandlungsfunktion zur Optimierung der Übereinstimmung zwischen entsprechenden Grauabständen und Farbabständen (S 18).

2. Verfahren nach Anspruch 1, bei dem der Schritt e die Berechnung einer lokalisierten Korrekturfunktion mit Hilfe einer Optimierung der Übereinstimmung zwischen entsprechenden Grauabständen und Farbabständen für die genannten Hauptfarben umfasst (S 16), sowie das Kombinieren der naiven Umwandlungsfunktion mit der lokalisierten Korrekturfunktion (S 18).

3. Verfahren nach Anspruch 2, bei dem die lokalisierte Korrekturfunktion einen Wert hat, der mit dem Abstand zwischen einer umzuwandelnden Farbe und einer Hauptfarbe in einem Farbraum abnimmt.

4. Verfahren nach Anspruch 1 oder 2, bei dem die Erzeugung der adaptierten Umwandlungsfunktion (S18) automatisch ausgeführt wird, getrennt für jedes Farbbild oder für eine Gruppe von Farbbildern.

5. Vorrichtung zur Umwandlung eines digitalen Farbbildes in ein Grauwertbild, mit einem Speicher (2) zum Speichern eines digitalen Farbbildes und einer Verarbeitungseinheit (3) zum Verarbeiten von digitalen Daten, **gekennzeichnet durch**:

   a. ein Cluster-Modul zur Bestimmung von Haupt-Farbwerten des digitalen Farbbildes mit Hilfe einer Cluster-Analyse der Farben der Pixel in einem Farbraum;
   b. ein Umwandlungsmodul zum Umwandeln von Farbwerten in Grauwerte mit Hilfe einer naiven Umwandlungsfunktion, basierend auf Luminanz oder einem gewichteten Mittel von Farbkanalwerten des digitalen Farbbildes;
   c. ein Farbabstandsmodul zum Berechnen des Farbabstands der Farbwerte in einem Farbraum;
   d. ein Grauabstandsmodul zum Berechnen des Grauabstands der Grauwerte auf einer Grauwertskala;
   e. ein Adaptionsmodul zum Compilieren einer adaptiven Umwandlungsfunktion zur Optimierung der Übereinstimmung zwischen entsprechenden Grauabständen und Farbabständen.

6. Vorrichtung nach Anspruch 5, bei der das Adaptionsmodul dazu ausgebildet ist, mit Hilfe einer Optimierung der Übereinstimmung zwischen entsprechenden Grauabständen und Farbabständen für die genannten Hauptfarben eine lokalisierte Korrekturfunktion zu berechnen und die naive Umwandlungsfunktion mit der lokalisierten Korrekturfunktion zu kombinieren.

7. Computerprogramm mit einem Programmcode zum Umwandeln eines digitalen Farbbildes in ein Grauwertbild durch Ausführung der Schritte des Verfahrens nach einem der Ansprüche 1 oder 4, wenn das Programm auf einem Computer ausgeführt wird.

8. Computerprogrammprodukt mit Computersoftware nach Anspruch 7, gespeichert auf einem maschinenlesbaren Speichermedium.

9. Digitaler Kopierer mit einem Scanner, einer Verarbeitungseinheit (3) zur Verarbeitung digitaler Bilddaten, und einer Druckereinheit (4), **dadurch gekennzeichnet, dass** die Verarbeitungseinheit (3) mit einer Umwandlungsvorrichtung nach Anspruch 5 oder 6 ausgerüstet ist.

10. Digitaler Kopierer nach Anspruch 9, mit einer Benutzerschnittstelle (5), die Mittel aufweist, mit denen die Umwandlungsvorrichtung derart umschaltbar ist, dass die Umwandlung von Farbwerten in Grauwerte optional mit Hilfe einer vordefinierten naiven Umwandlungsfunktion oder mit Hilfe einer automatisch angepassten Umwandlungsfunktion erfolgt.

11. Drucker mit einer Netzwerkanschlusseinheit (6) für den Empfang extern erzeugter Druckaufträge, einer Verarbeitungseinheit (3) zum Verarbeiten digitaler Bilddaten und einer Druckereinheit (4), **dadurch gekennzeichnet, dass** die Verarbeitungseinheit (3) mit einer Umwandlungsvorrichtung nach Anspruch 5 oder 6 ausgerüstet ist.

12. Drucker nach Anspruch 11, bei dem die Umwandlungsvorrichtung so programmierbar ist, dass die Umwandlung von Farbwerten in Grauwerte optional mit Hilfe einer vordefinierten naiven Umwandlungsfunktion oder mit Hilfe einer automatisch adaptierten Umwandlungsfunktion erfolgt.

**Revendications**

1. Procédé destiné à convertir une image couleur numérique, constituée de pixels, en une image de valeurs de gris et de ce fait à reproduire de manière reconnaissable les couleurs présentes dans l'image couleur, **caractérisé par** les étapes suivantes:

   a. déterminer les valeurs de couleurs principales de l'image couleur numérique au moyen d'une analyse de groupement des couleurs des pixels dans un espace de couleurs (S4) ;
   b. convertir lesdites valeurs de couleurs principales en valeurs de gris au moyen d'une fonction de conversion naïve prédéfinie (S6) sur la base de la luminance ou d'une moyenne pondérée de valeurs de canaux de couleurs de l'image couleur numérique ;
   c. calculer une distance dans un espace de couleurs, désigné ci-après sous le nom de distance de couleurs, de valeurs de couleurs principales mutuellement ;
   d. calculer une distance sur une échelle de valeurs de gris, désignée ci-après sous le nom de distance de gris, des valeurs de gris qui correspondent aux valeurs de couleurs principales mutuellement ;
   e. compiler une fonction de conversion adaptée pour une optimisation de l'accord entre les distances de gris correspondantes et les distances de couleurs (S18).

2. Procédé selon la revendication 1, dans lequel l'étape e. comprend les étapes consistant à calculer une fonction de correction localisée au moyen de l'optimisation de l'accord entre les distances de gris correspondantes et les distances de couleurs pour lesdites couleurs principales (S16), et à combiner la fonction de conversion naïve et la fonction de correction localisée (S18).

3. Procédé selon la revendication 2, dans lequel la fonction de correction localisée présente une valeur qui diminue avec la distance dans un espace de couleurs entre une couleur de conversion et une couleur principale.

4. Procédé selon l'une quelconque des revendications 1 ou 2, dans lequel la génération de la fonction de conversion adaptée (S18) est effectuée de manière automatique, pour chaque image couleur ou pour un groupe d'images couleur séparément.

5. Appareil destiné à associer une image couleur numérique à une image de valeur de gris, l'appareil étant doté d'une mémoire (2) destinée à stocker une image couleur numérique et d'une unité de traitement (3) destinée à traiter des données numériques, **caractérisé par** :

   a. un module de groupement destiné à déterminer les valeurs de couleurs principales de l'image couleur numérique au moyen d'une analyse de groupement des couleurs des pixels dans un espace de couleurs ;
   b. un module de conversion destiné à convertir les valeurs de couleurs en valeurs de gris au moyen d'une fonction de conversion naïve sur la base de la luminance ou d'une moyenne pondérée de valeurs de canaux de couleurs de l'image couleur numérique ;
   c. un module de distance de couleur destiné à calculer la distance de couleur des valeurs de couleurs dans un espace de couleurs ;
   d. un module de distance de gris destiné à calculer la distance de gris des valeurs de gris sur une échelle de valeurs de gris ;
   e. un module d'adaptation destiné à compiler une fonction de conversion adaptative pour une optimisation de l'accord entre les distances de gris correspondantes et les distances de couleurs.

6. Appareil selon la revendication 5, dans lequel le module d'adaptation est adapté de façon à calculer une fonction de correction localisée au moyen de l'optimisation de l'accord entre les distances de gris correspondantes et les distances de couleurs pour lesdites couleurs principales et à combiner la fonction de conversion naïve et la fonction de correction localisée.

7. Programme informatique présentant des codes de programme destiné à convertir une image couleur numérique en une image de valeurs de gris en exécutant les étapes du procédé selon l'une quelconque des revendications 1 ou 4, lorsque le programme est exécuté par un ordinateur.

8. Produit de programme informatique comprenant un logiciel selon la revendication 7, stocké dans un support de stockage qui peut être lu par une machine.

9. Copieur numérique doté d'un dispositif de balayage, d'une unité de traitement (3) destinée à traiter des données d'images numériques et d'une unité d'impression (4), **caractérisé en ce que** l'unité de traitement (3) est dotée d'un appareil de conversion selon la revendication 5 ou la revendication 6.

10. Copieur numérique selon la revendication 9, doté d'une interface utilisateur (5) qui est dotée de moyens destinés à commuter ledit appareil de conversion de telle sorte que la conversion de valeurs de couleurs en valeurs de gris soit exécutée éventuellement au moyen d'une fonction de conversion naïve prédéfinie ou au moyen d'une fonction de conversion adaptée de manière automatique.

11. Imprimante dotée d'une unité de connexion à un réseau (6) destinée à recevoir des ordres d'impression générés de manière extérieure, d'une unité de traitement (3) destinée à traiter des données d'images numériques et d'une unité d'impression (4), **caractérisée en ce que** l'unité de traitement (3) est dotée d'un appareil de conversion selon la revendication 5 ou la revendication 6.

12. Imprimante selon la revendication 11, dans laquelle ledit appareil de conversion est programmable de telle sorte qu'une conversion de valeurs de couleurs en valeur de gris soit exécutée éventuellement au moyen d'une fonction de conversion naïve prédéfinie ou au moyen d'une fonction de conversion adaptée de manière automatique.

# Fig. 1 A

# Fig. 1 B

# Fig. 3A

# Fig. 3B

Import colour image — S2

Search main colours — S4

Image main colours on grey axis by means of naïve conversion formula $L_0$ — S6

Analyse relationship between colour distance and grey distance for all the main colours mutually — S8

S10 — acceptable ? 

Yes → Image colour image data on grey axis by means of naïve conversion formula $L_0$ — S12

S12

exit — S14

No ↓

Make conversion formula $L_k$ for main colours — S16

Make adapted conversion formula $L$ for all the colours on the basis of $L_k$ and $L_o$ — S18

Image colour image data on grey axis by means of adapted conversion formula $L$ — S20

exit — S22

# Fig. 2

Iso–level contours of mapping L = f(R,G)

Fig. 4

Fig. 5

**EP 1 292 112 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 500327 A
- US 4369461 A
- US 5898819 A
- NL 1013669